# EUROPÄISCHE PATENTSCHRIFT

(11) **EP 3 602 694 B1**
(45) Veröffentlichungstag und Bekanntmachung des Hinweises auf die Patenterteilung: **18.09.2024**
(21) Anmeldenummer: 18709338.0
(22) Anmeldetag: 05.03.2018
(51) Int. Cl.: H01R 13/453, H01R 13/52

(54) **SCHALTANLAGENKONTAKTEINRICHTUNG**
SWITCHGEAR-CONTACTING DEVICE
DISPOSITIF DE CONTACT D'INSTALLATION DE DISTRIBUTION

(30) Priorität: 21.03.2017 DE 102017002705
(43) Veröffentlichungstag der Anmeldung: 05.02.2020
(73) Patentinhaber: ABB Schweiz AG, 5400 Baden (CH)
(72) Erfinder: GRAF, Alexander, 68309 Mannheim (DE)
(74) Vertreter: Maiwald GmbH
(86) Internationale Anmeldenummer: PCT/EP2018/055322
(87) Internationale Veröffentlichungsnummer: WO 2018/172047

(56) Entgegenhaltungen:
- EP-A1- 2 211 426
- DE-T2- 69 411 420
- JP-A- 2005 056 617
- JP-A- 2014 053 127

## Beschreibung

Die Erfindung betrifft eine Schaltanlagenkontakteinrichtung zur elektrischen Verbindung eines Schaltanlagenmoduls oder -einschubs mit wenigstens einer Sammelschiene einer Schaltanlage, insbesondere einer Niederspannungsschaltanlage.

Bei bekannten Kontakteinrichtung greifen beim Kontaktschluß in aller Regel ein Kontaktstift und eine Kontaktbuchse ineinander, wobei der Kontaktschluß durch das Einschieben des jeweiligen Schaltanlagenmoduls in die Schaltanlage bewirkt wird. Wird das jeweilige Modul dabei zu schnell in die Schaltanlage eingeschoben kann es beim Kontaktschluss zum Auslösen beziehungsweise Aktivieren einzelner elektrischer Einrichtungen und Geräte innerhalb des Moduls kommen oder diese gar verloren gehen beziehungsweise ausfallen.

Darüber hinaus können beim Einschieben des jeweiligen Moduls in die Schaltanlage mechanische Belastungen der Kontakteinrichtung, beispielsweise in der Art von Scherkräften auf den Kontaktstift, auftreten, die letztlich zu einer Verformung und/oder Beschädigung von Kontaktstift und/oder Kontaktbusche führen können.

Die Druckschrift JP 2014053127 A beschreibt einen Ladeanschluss, der die Lichtbogenentladung unterdrücken kann, selbst wenn der Ladeanschluss während des Ladens versehentlich aus dem fahrzeugseitigen Anschluss herausgezogen wird. Eine Fingerberührung-Verhinderungsplatte ist innerhalb des ladungsseitigen Anschlusses angeordnet.

Die Druckschrift JP 2005056617 A beschreibt einen Adapter, der das Biegen eines zentralen Kontaktstifts verhindern kann. Ein Stiftschutzelement ist hierbei einstückig mit dem oberen Oberflächenabschnitt ausgebildet.

Die Druckschrift DE 69411420T2 offenbart einen zylindrischen Steckverbinder mit einer einziehbaren Schutzabdeckung mit Löchern zum Durchlassen der Kontaktstifte während des Einziehens. Die Abdeckung wird durch entsprechende Strukturen am Rand der Abdeckung und am Gehäuse des Steckverbinders geführt und in ihrer Verschiebung begrenzt.

Vorgenannte Nachteile zu vermeiden liegt der Erfindung die Aufgabe zu Grunde eine verbesserte Kontaktschlussmöglichkeit zum gesicherten und kontrollierten Herstellen einer elektrischen Verbindung eines Schaltanlagenmoduls mit der Sammelschiene einer Schaltanlage anzugeben.

Die erfindungsgemäße Kontakteinrichtung umfasst demnach wenigstens ein erstes Kontaktelement und wenigstens ein zweites Kontaktelement, welche zu Bewirkung einer elektrisch leitenden Verbindung ineinander schiebbar, insbesondere formschlüssig ineinander schiebbar sind, und dadurch miteinander elektrisch leitend verbindbar sind, wobei das wenigstens eine erste Kontaktelement eine erste becherartige Kontaktbuchse und das wenigstens eine zweite Kontaktelement einen von einer hohlzylinderartigen Umfassung umgebenen, zentrisch in dieser angeordneten Kontaktstift umfasst und wobei zwischen Kontaktstift und Umfassung ein umlaufender Freibereich vorgesehen ist, welcher durch eine ringartige kraftbeaufschlagte, in axialer Richtung des Kontaktstiftes verschiebbar angeordnete Blende stirnseitig verschließbar ist, und wobei Freibereich, Buchseninnen- und -außendurchmesser, Stiftdurchmesser und lichte Weite der Umfassung derart aufeinander abgestimmt sind, dass die Kontaktbuchse zum beziehungsweise bei Kontaktschluss unter Verschiebung der ringartigen Blende den Stift über- und in den Freibereich eingreift,wobei das jeweilige Kontaktelement ein Kontaktelementgehäuse, vorzugsweise aus elektrisch nicht leitendem Kunststoff, aufweist, und wobei in das Gehäuse und/oder die Umfassung des zweiten Kontaktelementes wenigstens ein, vorzugsweise zwei oder mehr Führungselemente zur Führung und/oder Halterung der ringartigen Blende integriert sind, wobei die ringartige Blende dazu komplementäre Führungsmittel, beispielsweise in der Art eines oder mehrerer Zapfen, aufweist; und wobei es sich bei dem Führungselement um ein in der Umfassung angeordnete und in die Umfassung eingebrachte in axialer Richtung verlaufende Nuten oder Ausnehmungen und/oder eine radial umlaufende in Richtung des Kontaktstiftes erfolgte Abkragung handelt.

Der Erfindung liegt die Idee zu Grunde eine Blende in die Kontakteinrichtung zu integrieren, um ein kompaktes und stabiles mit vergleichsweise geringem Aufwand ausbildbaren Verschlusssystem des inneren Kontaktbereiches des zweiten Kontaktelementes auszubilden.

Vorteilhaft ist dabei vorgesehen, dass das jeweilige Kontaktelement ein Kontaktgehäuse, vorzugsweise aus elektrisch nicht leitendem Kunststoff, aufweist. Weiterbildend ist dabei vorsehbar, dass die Umfassung des zweiten Kontaktelementes als Teil des Gehäuses, insbesondere aus elektrisch nicht leitendem beziehungsweise isolierendem Kunststoff, ausgebildet ist.

Gemäß der Erfindung sind in das Gehäuse und/oder die Umfassung des zweiten Kontaktelementes wenigstens ein, vorzugsweise zwei Führungselemente zur Führung und/oder Halterung der ringartigen Blende integriert, wobei die ringartige Blende dazu komplementäre Führungsmittel, beispielweise in der Art eines oder mehrerer Zapfen, aufweist.

Bei dem wenigstens einen Führungselement handelt es sich dabei um ein oder zwei über die Innenumfangsfläche der Umfassung angeordnete und in die Umfassung eingebrachte in axialer Richtung verlaufende Nuten oder Ausnehmungen und/oder eine radial umlaufende in Richtung des Kontaktstiftes erfolgte Abkragung.

Umfasst in einer vorteilhaften Ausführungsform das wenigstens eine Führungselement zwei sich gegenüberliegend in der Umfassung des zweiten Kontaktelementes vorgesehene axial verlaufende Nuten oder Schlitze, so weist die jeweilige Ringblende dazu komplementär ausgebildete Anformungen, beispielsweise Zapfen auf, welche in den entsprechenden Nuten oder Schlitzen geführt sind. Vorteilhaft weist eine weitere Ausführungsform eines zweiten Kontaktelementes eine in das Kontaktelementgehäuse integrierte und durch dieses geführte ringartige Blende, einen Kontaktstift mit isolierter Kontaktstiftspitze, eine durch das Gehäuse gebildete Umfassung und wenigstens eine zur Kraftbeaufschlagung der ringartigen Blende eingesetzte Feder auf.

Das Kontaktgehäuse kann dabei vorteilhaft mehrere funktionale Aufgaben wahrnehmen. So kann es einerseits der Führung und Ausrichtung für die Kontaktbuchse als auch des Schutzes des Kontaktstiftes dienen. Innerhalb des Gehäuses ist eine unter Vorspannung gehaltene Feder vorsehbar, so dass die im Freibereich zwischen Stift und Umfassung angeordnete ringartige Blende nur unter Beaufschlagung einer vorbestimmbaren Kraft verschiebbar und/oder der Kontaktschluss zwischen erstem und zweiten Kontaktelement bewirkbar ist. Die zu überwindende vorbestimmbare Kraft zur Verschiebung der ringartigen Blende, beispielsweise 4 bis 6 Newton, dient dabei auch der Einhaltung der IP4x Norm beziehungsweise des entsprechenden Standards. Selbst ohne funktionierende Blende oder bei deutlich geringerer Vorspannung beziehungsweise Kraftbeaufschlagung, beispielsweise im Bereich von 1 Newton, würde die Kontakteinrichtung noch die Schutzfunktion nach IP2x erfüllen.

Eine Schaltanlagenkontakteinrichtung kann dabei auch mehrere erste modulseitig nebeneinanderliegend angeordnete erste Kontaktelemente sowie mehrere dazu sammelschienenseitig komplementär nebeneinander angeordnete zweite Kontaktelemente aufweisen.

Vorteilhaft können die jeweilig nebeneinanderliegend angeordneten Kontaktelemente in einem entsprechenden Montagerahmen schwimmend angeordnet sein, um das Zusammenführen und Ineinandergreifen von jeweils ersten und zweiten Kontaktelement beim Einschieben des jeweiligen Moduls in die Schaltanlage und Herstellen eines Kontaktschlusses zu erleichtern und den Verschleiß zu reduzieren,

Wird das entsprechende Schaltanlagenmodul in der jeweiligen Schaltanlage verbaut, so wird beim Einbauen beziehungsweise Einschieben in Einbauposition beziehungsweise bis in Endlage die Blende des zweiten Kontaktelementes durch das erste Kontaktelement und damit die Kontaktbuchse geöffnet und/oder verschoben. Aufgrund der beaufschlagten Federkraft wird das jeweilige Schaltanlagenmodul beim Einsetzvorgang abgebremst, wodurch das Risiko mechanischer Beschädigungen durch zu schnelles Einsetzen sowie das ungewollte Auslösen einzelner Module oder einzelner Komponenten innerhalb des jeweiligen Moduls vermeidbar zumindest jedoch weitestgehend reduzierbar ist.

Weiterhin übt die Blende vorteilhaft auch eine Art Schutzfunktion für den Kontaktstift aus, da dieser durch die ringartige Blende vor radialer Krafteinwirkung, insbesondere bei Herstellung des Kontaktschlusses geschützt ist. Weiterhin wird der Kontaktstift durch die Blende vor Verunreinigungen beispielsweise durch strömendes Gas und/oder Salznebel geschützt.

Erfindungsgemäß ist weiterhin erkannt worden, dass durch Integration der ringartigen Blende in das Gehäuse und Kraft-, insbesondere Federbeaufschlagung kein gesonderter Öffnungsmechanismus vorzusehen ist, den Kontaktstift freizugeben.

Das Freigeben des Kontaktstiftes und Öffnen der Blende erfolgt durch Einschieben des jeweiligen Schaltanlagenmoduls. Das Schließen der Blende wird durch die Feder zur bewirkt. Es sind nur wenige mechanische Teile, insbesondere bewegliche mechanische Teile, involviert, die verschleißen können und/oder durch mechanische Beanspruchung beschädigt werden können, wodurch sich der mechanische Verschleiß deutlich reduzieren und das Ausfallrisiko deutlich erhöhen lässt.

In vorteilhafter Ausgestaltung ist das jeweils zweite Kontaktelement alternativ auch ohne Feder- oder Federelement ausbildbar, wobei dann Mittel vorzusehen sind, durch welche das Modul beim Einsetzen die Blende freigibt und /oder öffnet und beim Entfernen aus der Schaltanlage die Blende der Bewegung des Moduls folgt und den Freiraum bei Modulentnahme verschließt. Beispielsweise könnten die demgemäßen Mittel einen oder mehrere Gewindegänge und / oder Magneten umfassen. Durch Verwendung eines oder mehrerer Gewindegänge ließe sich die Andruckkraft deutlich erhöhen, die erforderlich wäre die Blende zu öffnen beziehungsweise zu bewegen und das jeweilige Schaltanlagenmodul einzusetzen. Die Entnahme des Moduls und damit auch das Schließen der Blende könnte dabei auf entsprechen gegenläufigem Weg durchgeführt werden.

Insbesondere die ersten paar Millimeter des Weges könnten dabei helfen die IP Anforderungen zu erfüllen. Durch das Gewinde würden weiterhin Reibungskräfte auftreten, wobei die Größe oder Stärke der Reibungskräfte von den Dimensionen, insbesondere der Ganghöhe, des Gewindes abhängen.

Auch könnten die Mittel beispielsweise einen Mitnehmer, insbesondere in der Art eines mehrfach verwendbaren, insbesondere ein- bis zweimal verwendbaren, Plastikhakens oder -nase umfassen, welcher von dem Modul beim Ein- und/oder Entnahmevorgang entsprechend bewegt wird.

Weiterhin ist vorsehbar, dass für jedes zweite Kontaktelement jeweils eine individuelle, separate Blende vorgesehen ist, oder bei mehrpoliger Ausführung eine drei bis vier Pole oder drei bis 4 zweite Kontaktelemente umfassende Blendenanordnung vorgesehen ist.

Die Blendenbewegung oder -Öffnung und -schließung kann dabei individuell für beziehungsweise durch jedes Kontaktelement separat oder das jeweilige Modul insgesamt bewirkt sein oder werden.

Vorteilhaft kann die Blende statt eines Ringes auch eine andere Geometrie aufweisen.

Weiterhin sind zwischen Blende und Kontaktstift und /oder Umfassung Dichtmittel zur Erreichung einer höheren Schutzklasse vorsehbar.

Bei Verwendung einer Feder zur Kraftbeaufschlagung der Blende kann die Federspannung über die gesamte Länge so hoch wie nach IEC60529 IP gefordert gegeben sein, so dass nach IP3x und IP4x auf eine externe oder zusätzliche Verriegelung verzichtet werden kann.

Vorteilhaft kann das Element zur Kraftbeaufschlagung der Blende, insbesondere eine Feder, innerhalb der Umfassung oder des Kontaktelementgehäuses oder außerhalb der Umfassung oder des Kontaktelementgehäuses angeordnet sein.

Die weitere Darlegung der Erfindung sowie vorteilhafter Ausgestaltungen und Weiterbildungen erfolgt anhand einiger Figuren und Ausführungsbeispiele.

Es zeigen:
- Fig. 1: beispielhaft erfindungsgemäß ausgebildete zweite Kontaktelemente einer vierpolig ausgebildeten Kontakteinrichtung in 3dim-Schrägansicht,
- Fig. 2: beispielhaft erfindungsgemäß ausgebildete zweite Kontaktelemente einer vierpolig ausgebildeten Kontakteinrichtung mit außen liegendem Kraftelement in Schnittansicht,
- Fig. 3a: beispielhaft erfindungsgemäß ausgebildetes zweites Kontaktelement mit geschlossener Blende in 3dim-Schrägansicht,
- Fig. 3b: beispielhaft erfindungsgemäß ausgebildetes zweites Kontaktelement mit geöffneter Blende in 3dim-Schrägansicht,
- Fig. 4a: beispielhaft erfindungsgemäß ausgebildetes zweites Kontaktelement mit geschlossener Blende in Schnittansicht,
- Fig. 4b: beispielhaft erfindungsgemäß ausgebildetes zweites Kontaktelement mit geöffneter Blende in Schnittansicht,
- Fig. 5: beispielhaft erfindungsgemäß ausgebildete sammelschienenseitige vierpolig ausgebildete Kontakteinrichtung mit vier zweiten Kontaktelementen in einem Gehäuse in 3dim-Schrägansicht,
- Fig. 6: beispielhaft erfindungsgemäß ausgebildetes sammelschienenseitige Kontakteinrichtung mit vier zweiten Kontaktelementen in einem Gehäuse in 3dim-Schnittansicht,
- Fig. 7: beispielhaft erfindungsgemäß ausgebildete vierpolig ausgebildete Kontakteinrichtung mit vier ersten und vier zweiten Kontaktelementen in 3dim-Schnittansicht.

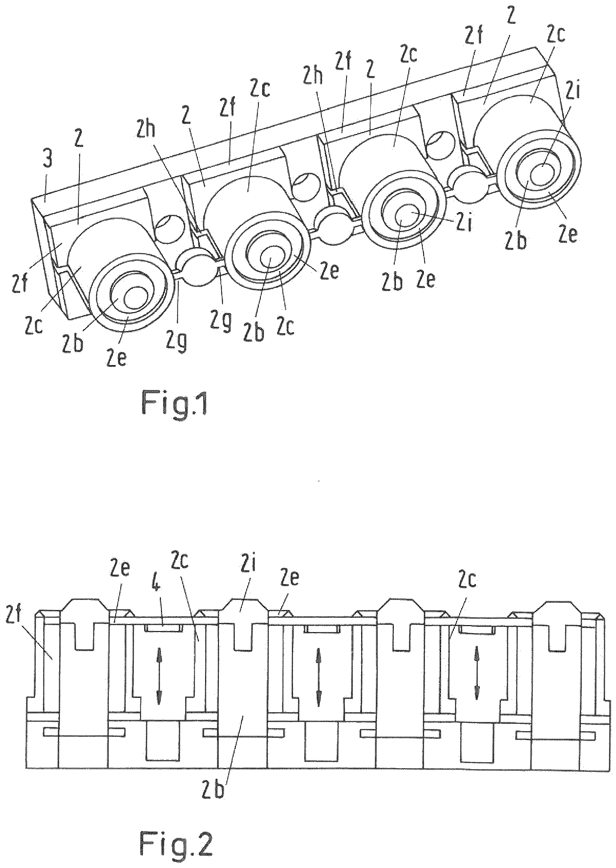

In Fig. 1 ist der sammelschienenseitige Teil einer 4-poligen gemäß der Erfindung ausgeführten Schaltanlagenkontakteinrichtung, insbesondere einer Niederspannungsschaltanlagenkontakteinrichtung, gezeigt, welche demnach vier zweite Kontaktelemente (2), welche einen von einer hohlzylinderartigen Umfassung (2c) umgebenen, zentrisch in dieser angeordneten Kontaktstift (2b) umfasst und wobei zwischen Kontaktstift (2b) und Umfassung (2c) ein umlaufender Freibereich (2d) vorgesehen ist, welcher durch eine ringartige kraftbeaufschlagte, in axialer Richtung des Kontaktstiftes (2b) verschiebbar angeordnete Blende (2e) stirnseitig verschließbar ist.

Das jeweilige Kontaktelement (2) weist dabei ein Kontaktelementgehäuse (2f), vorzugsweise aus elektrisch nicht leitendem Kunststoff, auf.

Die Umfassung (2c) des jeweiligen zweiten Kontaktelementes (2) ist hier beispielhaft als Teil des Gehäuses (2f), insbesondere aus elektrisch nicht leitendem beziehungsweise elektrisch isolierendem Kunststoff, ausgebildet.

Die vier zweiten Kontaktelemente (2) können dabei schwimmend oder mit Spiel leicht beweglich auf einem entsprechenden Träger (3) angeordnet sein.

In einer vorteilhaften Ausgestaltung sind in das Gehäuse (2f) und/oder die Umfassung (2c) des jeweiligen zweiten Kontaktelementes (2) zwei Führungselemente zur Führung und/oder Halterung der ringartigen Blende (2e) integriert, wobei die ringartige Blende (2e) dazu komplementäre Führungsmittel, beispielweise in der Art zweier Zapfen (2g), aufweist.

Bei den Führungselementen handelt es sich dabei um über in die Umfassung eingebrachte in axialer Richtung verlaufende sich gegenüberliegende Ausnehmungen oder Schlitze (2h).

In der hier gezeigten Ausführung sind die einzelnen Blenden (2e) über Verbindungselemente (4) zu einer alle vier Pole übergreifenden Blendenanordnung zusammengefasst und verbunden.

Der in jedem zweiten Kontaktelement (2) vorgesehene Kontaktstift weist darüber hinaus eine elektrisch isolierte Spitze (2i), wobei die Isolierung mittels eines elektrisch isolierenden Kunststoffes, wie beispielsweise Polyamid gebildet ist.

Wie der Fig. 2 deutlicher zu entnehmen, ist zwischen den einzelnen Kontaktelementen jeweils noch ein Kraftelement (in der Figur nicht explizit gezeigt), beispielsweise eine Feder vorsehbar, welche die Blendenanordnung unter Vorspannung und damit die Blenden geschlossen und den Freibereich damit verschlossen hält.

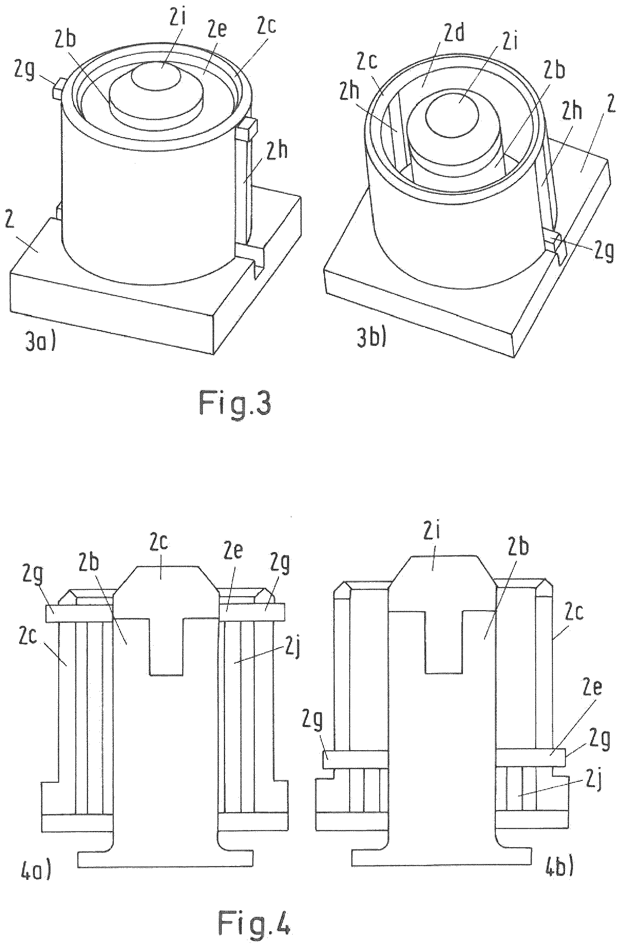

In Fig. 3a,b ist ein beispielhaftes erfindungsgemäß ausgebildetes zweites Kontaktelement (2), welches einen von einer hohlzylinderartigen Umfassung (2c) umgebenen, zentrisch in dieser angeordneten Kontaktstift (2b) mit elektrisch isolierter Spitze (2i) umfasst und wobei zwischen Kontaktstift (2b) und Umfassung (2c) ein umlaufender Freibereich (2d) vorgesehen ist, welcher durch eine ringartige kraftbeaufschlagte, in axialer Richtung des Kontaktstiftes (2b) verschiebbar angeordnete Blende (2e) stirnseitig verschließbar ist. Als Kraftelement zur Kraftbeaufschlagung ist dabei wenigstens eine innerhalb der Umfassung im Freibereich oder Freiraum (2d) angeordnete Feder (2j) vorgesehen.

Das jeweilige Kontaktelement (2) weist dabei ein Kontaktelementgehäuse (2f), vorzugsweise aus elektrisch nicht leitendem Kunststoff, auf.

Die Umfassung (2c) des gezeigten zweiten Kontaktelementes (2) ist hier beispielhaft als Teil des Gehäuses (2f), insbesondere aus elektrisch nicht leitendem beziehungsweise elektrisch isolierendem Kunststoff, ausgebildet.

In das Gehäuse (2f) und/oder die Umfassung (2c) des gezeigten zweiten Kontaktelementes (2) sind zwei schlitzartige axial verlaufende Führungselemente (2h) zur Führung und/oder Halterung der ringartigen Blende (2e) integriert, wobei die ringartige Blende (2e) dazu komplementäre Führungsmittel in der Art zweier Zapfen (2g) aufweist, welche die axial verlaufenden Führungselemente (2k) durchragen.

In Fig. 3a ist das zweite Kontaktelement mit geschlossener Blende und in Fig. 3b mit zurückgeschobener, geöffneter Blende gezeigt.

Eine entsprechende Schnittansicht ist durch die Fig.4a mit geschlossener und Fig. 4b mit geöffneter Blende wiedergegeben.

Da alle vier Figuren grundsätzlich die gleichen Merkmale zeigen wird hinsichtlich der Figuren 4a,b auf die Beschreibung der Figuren 3a,b verwiesen.

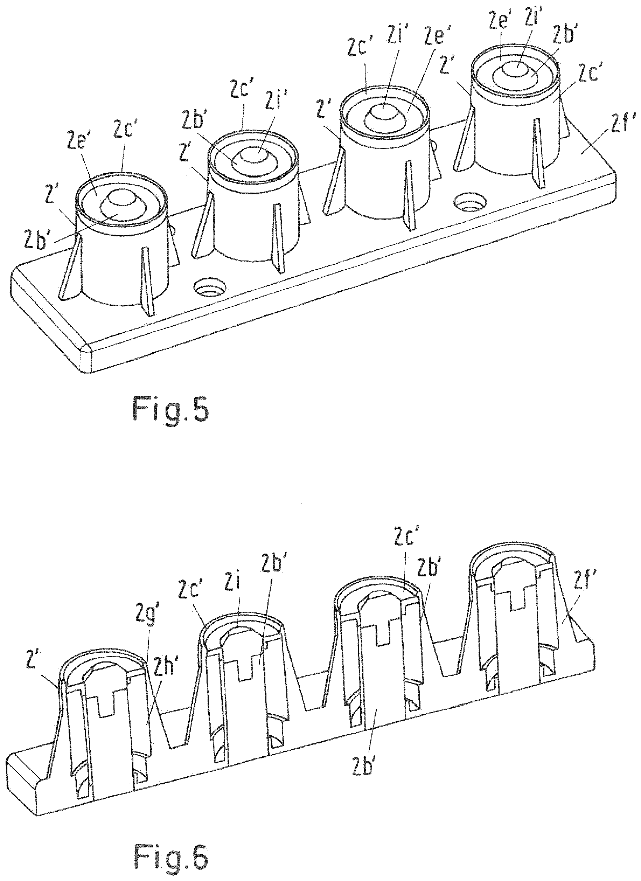

In Fig. 5 ist der sammelschienenseitige Teil einer 4-poligen gemäß der Erfindung ausgeführten Schaltanlagenkontakteinrichtung, insbesondere einer Niederspannungsschaltanlagenkontakteinrichtung, gezeigt, welche demnach vier in einem gemeinsamen Gehäuse (2f') angeordnete zweite Kontaktelemente (2') aufweist, welche jeweils einen von einer hohlzylinderartigen Umfassung (2c') umgebenen, zentrisch in dieser angeordneten Kontaktstift (2b') mit elektrisch isolierter beziehungsweise isolierender Spitze umfasst und wobei zwischen Kontaktstift (2b) und Umfassung (2c') ein umlaufender Freibereich (2d') vorgesehen ist, welcher durch eine ringartige kraftbeaufschlagte, in axialer Richtung des Kontaktstiftes (2b') verschiebbar angeordnete Blende (2e') stirnseitig verschließbar ist.

Das Gehäuse (2f') ist dabei vorzugsweise aus elektrisch nicht leitendem Kunststoff, gebildet.

Die Umfassung (2c') des jeweiligen zweiten Kontaktelementes (2') ist hier beispielhaft als Teil des Gehäuses (2f') ausgebildet.

In das Gehäuse (2f') und/oder die Umfassung (2c') des jeweiligen zweiten Kontaktelementes (2') sind wenigstens zwei Führungselemente in Form von Nuten (2h') zur Führung und/oder Halterung der ringartigen Blende (2e') integriert, wobei die ringartige Blende (2e') dazu komplementäre Führungsmittel, beispielweise in der Art zweier angeformter Zapfen (2g'), aufweist.

Bei den Führungselementen handelt es sich dabei um über in die Umfassung eingebrachte in axialer Richtung verlaufende sich gegenüberliegende Ausnehmungen oder Nuten (2h').

In der hier gezeigten Ausführung sind die einzelnen Blenden (2e') nicht verbunden und unabhängig voneinander schließ- oder aufmachbar beziehungsweise bewegbar.

Der in jedem einzelnen zweiten Kontaktelement (2') vorgesehene Kontaktstift weist darüber hinaus eine elektrisch isolierte Spitze (2i'), auf wobei die Isolierung mittels eines elektrisch isolierenden Kunststoffes, wie beispielsweise Polyamid gebildet ist.

In der hier gezeigten Ausführung ist jeweils ein Kraftelement (in der Figur nicht explizit gezeigt), beispielsweise eine Feder im Freibereich vorsehbar, welche die Blendenanordnung unter Vorspannung und damit die jeweilige Blende (2e') geschlossen und den Freibereich damit verschlossen hält.

Eine entsprechende Schnittansicht der gemäß Fig. 5 gezeigten Ausführung ist durch die Fig.6 wiedergegeben. Da beide Figuren grundsätzlich die gleichen Merkmale zeigen wird hinsichtlich der Figur 6 auf die Beschreibung zu der Figur 5 verwiesen.

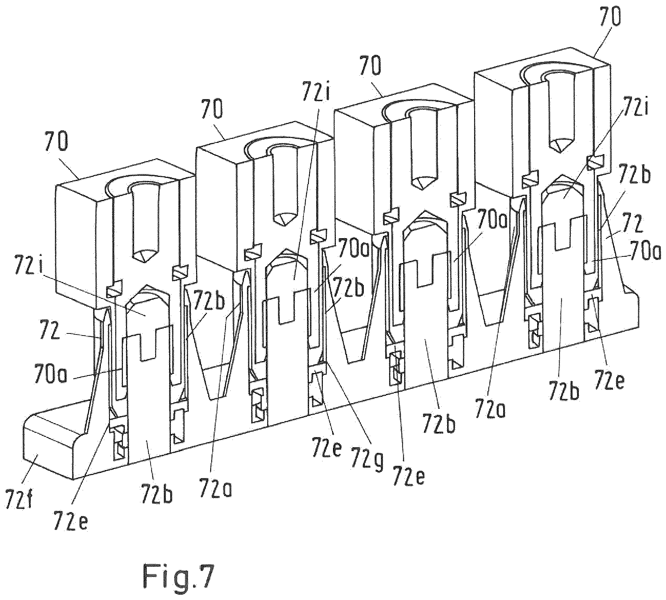

In Fig. 7 ist eine beispielhaft ausgebildete erfindungsgemäße Kontakteinrichtung mit vier modulseitigen ersten Kontaktelementen (70) und vier sammelschienenseitigen zweiten Kontaktelementen (72) gezeigt, welche zu Bewirkung einer elektrisch leitenden Verbindung ineinanderschiebbar, insbesondere formschlüssig ineinanderschiebbar sind, und dadurch miteinander elektrisch leitend verbindbar sind, wobei

das jeweilige erste Kontaktelement (70) eine erste becherartige Kontaktbuchse (70a) und das wenigstens eine zweite Kontaktelement (72) einen von einer hohlzylinderartigen Umfassung (72a) umgebenen, zentrisch in dieser angeordneten Kontaktstift (72b) umfasst und wobei zwischen Kontaktstift und Umfassung ein umlaufender Freibereich (72c) vorgesehen ist, welcher durch eine ringartige kraftbeaufschlagte, in axialer Richtung des Kontaktstiftes verschiebbar angeordnete Blende (72e) stirnseitig verschließbar ist, und wobei Freibereich (72c), Buchseninnen- und -außendurchmesser, Stiftdurchmesser und lichte Weite der Umfassung (72a) derart aufeinander abgestimmt sind, dass die Kontaktbuchse (70a) zum beziehungsweise bei Kontaktschluss unter Verschiebung der ringartigen Blende (72e) den Stift (72b) über- und in den Freibereich (72c) eingreift.

Die zweiten Kontaktelemente weisen dabei ein Gehäuse (72f) aus vorzugsweise elektrisch nicht leitendem Kunststoff auf.

Die Umfassung (72a) des jeweiligen zweiten Kontaktelementes (72) ist hier beispielhaft als Teil des Gehäuses (72f) ausgebildet.

In das Gehäuse (72f) und/oder die Umfassung (72a) des jeweiligen zweiten Kontaktelementes (72) sind wenigstens zwei Führungselemente in Form von Nuten (72h) zur Führung und/oder Halterung der ringartigen Blende (72e) integriert, wobei die ringartige Blende (72e) dazu komplementäre Führungsmittel, beispielweise in der Art zweier angeformter Zapfen (72g), aufweist.

Bei den Führungselementen handelt es sich dabei um über in die Umfassung eingebrachte in axialer Richtung verlaufende sich gegenüberliegende Ausnehmungen oder Nuten (72h).

In der hier gezeigten Ausführung sind die einzelnen Blenden (72e) nicht verbunden und unabhängig voneinander schließ- oder aufmachbar beziehungsweise bewegbar.

Der in jedem einzelnen zweiten Kontaktelement (72) vorgesehene Kontaktstift (72b) weist darüber hinaus eine elektrisch isolierte Spitze (72i), auf wobei die Isolierung mittels eines elektrisch isolierenden Kunststoffes, wie beispielsweise Polyamid gebildet ist.

In der hier gezeigten Ausführung ist jeweils ein Kraftelement (in der Figur nicht explizit gezeigt), beispielsweise eine Feder im Freibereich vorsehbar, welche die jeweilige Blende (72e) unter Vorspannung und damit in Ruhelage geschlossen und den Freibereich damit verschlossen hält. Erst bei Einschieben des Moduls in die Schaltanlage und Eingriff der Kontaktbuchse der ersten Kontaktelementes in den Freiraum des zweiten Kontaktelementes wird die Blende durch die beauflagte Kraft des ersten Kontaktelementes entlang des Verschiebeweges bewegt und geöffnet und der Kontaktstift zum Kontaktschluss freigegeben.

## Patentansprüche

1. Schaltanlagenkontakteinrichtung für eine Niederspannungsschaltanlage, umfassend wenigstens ein erstes Kontaktelement und wenigstens ein zweites Kontaktelement (2), welche zu Bewirkung einer elektrisch leitenden Verbindung ineinanderschiebbar, insbesondere formschlüssig ineinanderschiebbar sind, und dadurch miteinander elektrisch leitend verbindbar sind, wobei
das wenigstens eine erste Kontaktelement eine erste becherartige Kontaktbuchse und das wenigstens eine zweite Kontaktelement (2) einen von einer hohlzylinderartigen Umfassung (2c) umgebenen, zentrisch in dieser angeordneten Kontaktstift (2b) umfasst und wobei zwischen Kontaktstift (2b) und Umfassung ein umlaufender Freibereich (2d) vorgesehen ist, welcher durch eine ringartige kraftbeaufschlagte, in axialer Richtung des Kontaktstiftes (2b) verschiebbar angeordnete Blende (2e) stirnseitig verschließbar ist, und wobei Freibereich (2d), Buchseninnen- und -außendurchmesser, Stiftdurchmesser und lichte Weite der Umfassung (2c) derart aufeinander abgestimmt sind, dass die Kontaktbuchse zum beziehungsweise bei Kontaktschluss unter Verschiebung der ringartigen Blende (2e) den Stift über- und in den Freibereich (2d) eingreift,
wobei das jeweilige Kontaktelement (2) ein Kontaktelementgehäuse (2f), vorzugsweise aus elektrisch nicht leitendem Kunststoff, aufweist, und wobei in das Gehäuse (2f) und/oder die Umfassung (2c) des zweiten Kontaktelementes (2) wenigstens ein, vorzugsweise zwei oder mehr Führungselemente (2h) zur Führung und/oder Halterung der ringartigen Blende (2e) integriert sind, wobei die ringartige Blende (2e) dazu komplementäre Führungsmittel, beispielsweise in der Art eines oder mehrerer Zapfen (2g), aufweist;
**dadurch gekennzeichnet, dass** es sich bei dem Führungselement (2h) um ein in der Umfassung (2c) angeordnete und in die Umfassung (2c) eingebrachte in axialer Richtung verlaufende Nuten oder Ausnehmungen und/oder eine radial umlaufende in Richtung des Kontaktstiftes (2b) erfolgte Abkragung handelt.

2. Kontakteinrichtung nach Anspruch 1, **dadurch gekennzeichnet, dass** die Umfassung (2c) des zweiten Kontaktelementes (2) als Teil des Gehäuses (2f), insbesondere aus elektrisch nicht leitendem beziehungsweise isolierendem Kunststoff, ausgebildet ist.

3. Niederspannungsschaltanlage mit wenigstens einem Schaltanlagenmodul und wenigstens einer Kontakteinrichtung nach einem der Ansprüche 1 bis 2.

## Claims

1. Switchgear contact device for a low-voltage switchgear, comprising at least one first contact element and at least one second contact element (2), which can be pushed into one another to effect an electrically conductive connection, in particular form-fittingly can be pushed into one another, and can thereby be electrically conductively connected to one another, wherein the at least one first contact element comprises a cup-shaped contact socket and the at least one second contact element (2) comprises a contact pin (2b) surrounded by a hollow cylindrical enclosure (2c) , arranged centrally therein, and wherein a circumferential free area (2d) is provided between the contact pin (2b) and the enclosure, which is closable at the front side by a ring-shaped, force-applied shutter (2e), arranged displaceably in the axial direction of the contact pin (2b), and wherein the free area (2d), inner and outer diameter of the socket, the diameter of the pin and the clear width of the enclosure (2c) are matched to one another in such a way that the contact socket engages over the pin and into the free area (2d) with displacement of the ring-shaped shutter (2e), and wherein the free area (2d), inner and outer diameter of the socket, diameter of the pin, and clearance width of the enclosure (2c) are matched to one another in such a way that the contact socket engages over the pin and into the free area (2d) during contact closure with displacement of the ring-shaped shutter (2e)
wherein the respective contact element (2) comprises a contact element housing (2f), preferably made of electrically non-conductive plastic, and wherein at least one, preferably two or more guide elements (2h) for guiding and/or retaining the ring-shaped shutter (2e) are integrated into the housing (2f) and/or the enclosure (2c) of the second contact element (2), wherein the ring-shaped shutter (2e) comprises complementary guide means, for example in the form of one or more pins (2g);
**characterised in that** the guide element (2h) is a groove or recess extending in the axial direction, arranged in and incorporated into the enclosure (2c), and/or a radially circumferential cantilever extending in the direction of the contact pin (2b).

2. Contact device according to claim 1, **characterised in that** the enclosure (2c) of the second contact element (2) is configured as part of the housing (2f), particularly made of electrically non-conductive or insulating plastic.

3. Low-voltage switchgear with at least one switchgear module and at least one contact device according to one of claims 1 to 2.

## Revendications

1. Dispositif de contact d'installation de distribution, destiné en particulier à une installation de distribution à basse tension, comprenant au moins un premier élément de contact et au moins un deuxième élément de contact (2) qui sont télescopiques, en particulier télescopiques par complémentarité de forme, pour réaliser une liaison électriquement conductrice, et qui peuvent ainsi être reliés de manière électriquement conductrice, dans lequel
ledit au moins un premier élément de contact comprend une première douille de contact en forme de coupelle, et ledit au moins un deuxième élément de contact (2) comprend une broche de contact (2b) entourée d'une bordure (2c) en forme de cylindre creux et disposée de façon centrée à l'intérieur de celle-ci, et dans lequel, entre la broche de contact (2b) et la bordure, une zone libre périphérique (2d) est prévue qui peut être fermée sur la face frontale par un diaphragme annulaire (2e) disposé de manière coulissante dans la direction axiale de la broche de contact (2b) et soumis à une force, et dans lequel la zone libre (2d), le diamètre intérieur et le diamètre extérieur de la douille, le diamètre de broche et la largeur libre de la bordure (2c) sont adaptés les uns aux autres de telle sorte que pour ou pendant l'établissement de contact, la douille de contact vient en prise avec la broche sur ou dans la zone libre (2d), en déplaçant le diaphragme annulaire (2e),
dans lequel l'élément de contact (2) respectif présente un boîtier d'élément de contact (2f) de préférence en matière plastique électriquement non-conductrice, et dans lequel au moins un, de préférence deux ou plusieurs éléments de guidage (2h) pour guider et/ou retenir le diaphragme annulaire (2e) sont intégrés dans le boîtier (2f) et/ou la bordure (2c) du deuxième élément de contact (2), dans lequel le diaphragme annulaire (2e) présente à cet effet des moyens de guidage complémentaires, par exemple sous la forme d'un ou de plusieurs tenons (2g) ; **caractérisé en ce que** l'élément de guidage (2h) correspond à des rainures ou évidements disposés dans la bordure (2c) et pratiqués dans la bordure (2c), s'étendant dans la direction axiale, et/ou à une saillie réalisée en s'étendant radialement en direction de la broche de contact (2b).

2. Dispositif de contact selon la revendication 1, **caractérisé en ce que** la bordure (2c) du deuxième élément de contact (2) est réalisée comme une partie du boîtier (2f), en particulier en matière plastique électriquement non-conductrice ou isolante.

3. Installation de distribution à basse tension, comprenant au moins un module d'installation de distribution et au moins un dispositif de contact selon l'une quelconque des revendications 1 et 2.
